# FASCICULE DE BREVET EUROPEEN

(11) **EP 3 079 197 B1**
(45) Date de publication et mention de la délivrance du brevet: **15.11.2017**
(21) Numéro de dépôt: 16163964.6
(22) Date de dépôt: 06.04.2016
(51) Int. Cl.: H01M 4/04, H01M 4/13, H01M 4/139, H01M 4/66, H01M 10/04, H01M 10/0525, B23K 26/00

(54) **PROCÉDÉ DE DÉCOUPE D'UNE ÉLECTRODE D'UN GÉNÉRATEUR ÉLECTROCHIMIQUE**
VERFAHREN ZUM TRIMMEN EINER ELEKTRODE EINES ELEKTROCHEMISCHEN GENERATORS
METHOD FOR CUTTING AN ELECTRODE OF AN ELECTROCHEMICAL GENERATOR

(30) Priorité: 09.04.2015 FR 1553048
(43) Date de publication de la demande: 12.10.2016
(73) Titulaire: Commissariat à l'Énergie Atomique et aux Énergies Alternatives, 75015 Paris (FR)
(72) Inventeur: BARTHE, Benoît, 38100 GRENOBLE (FR); SALOMON, Jérémie, 38250 VILLARD-DE-LANS (FR); VINCENT, Rémi, 38000 GRENOBLE (FR)
(74) Mandataire: GIE Innovation Competence Group

(56) Documents cités:
- KR-A- 20080 101 725
- Rahul Patwa ET AL: "INVESTIGATION OF DIFFERENT LASER CUTTING STRATEGIES FOR SIZING OF LI-ION BATTERY ELECTRODES", ICALEO 2012 Congress Proceedings (31th International Congress on Applications of Lasers & Electro-Optics, September 23-27, 2012, Anaheim, CA USA) - Paper M804, 27 septembre 2012 (2012-09-27), pages 1-7, XP055204681, Extrait de l'Internet: URL:http://www.cla.fraunhofer.org/content/ dam/ccl-laser/en/documents/papers_micromac hining/Investigation of different laser cutting strategies for sizing of Li ion battery electrodes.pdf [extrait le 2015-07-27]
- Rahul Patwa ET AL: "HIGH SPEED LASER CUTTING OF ELECTRODES FOR ADVANCED BATTERIES", ICALEO 2010 Congress Proceedings (29th International Congress on Applications of Lasers & Electro-Optics, September 26-30, 2010, Anaheim, CA USA) - Paper M902, 30 septembre 2010 (2010-09-30), pages 1-8, XP055204677, Extrait de l'Internet: URL:http://www.cla.fraunhofer.org/content/ dam/ccl-laser/en/documents/papers_micromac hining/High speed laser cutting of electrodes for advanced batteries.pdf [extrait le 2015-07-27]
- ALI GÖKHAN DEMIR ET AL: "Remote cutting of Li-ion battery electrodes with infrared and green ns-pulsed fibre lasers", THE INTERNATIONAL JOURNAL OF ADVANCED MANUFACTURING TECHNOLOGY, vol. 75, no. 9-12, 26 août 2014 (2014-08-26), pages 1557-1568, XP055204687, ISSN: 0268-3768, DOI: 10.1007/s00170-014-6231-7

## Description

### DOMAINE TECHNIQUE

Le domaine de l'invention est celui des procédés de réalisation des électrodes d'un générateur électrochimique, et plus particulièrement, celui des procédés de découpe d'électrode. L'invention s'applique en particulier aux électrodes des accumulateurs électrochimiques à base de lithium.

### ÉTAT DE LA TECHNIQUE ANTÉRIEURE

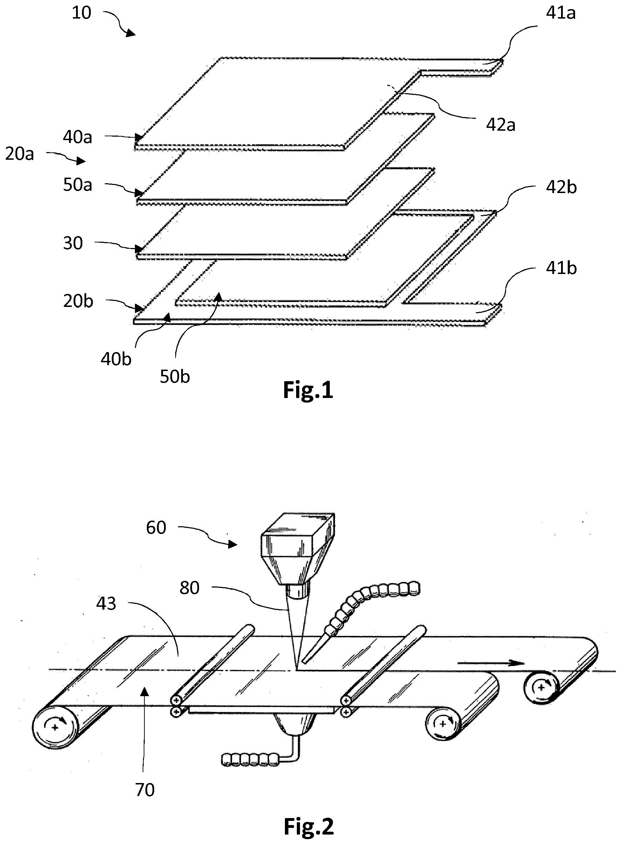

Un générateur électrochimique au lithium, par exemple une batterie Li-ion, fonctionne sur le principe d'insertion et de désinsertion (ou intercalation/désintercalation) de lithium sur au moins une électrode. Il comporte au moins un accumulateur à base de lithium, dont un exemple est illustré schématiquement en vue éclatée et en perspective sur la figure 1.

L'accumulateur 10 comprend deux électrodes 20a, 20b disposées de part et d'autre d'un séparateur 30 électriquement isolant destiné à recevoir ou à former un électrolyte échangeur d'ions. Les électrodes 20a, 20b comportent chacune un support 40a, 40b électriquement conducteur, sous la forme d'un feuillard métallique, qui assure une fonction de collection du courant électrique, le feuillard métallique étant partiellement recouvert d'une couche dite active 50a, 50b comportant un matériau électrochimiquement actif.

A titre d'exemple, l'électrode négative peut comprendre une couche active de graphite de quelques dizaines de microns d'épaisseur déposée sur un feuillard de cuivre d'une dizaine de microns d'épaisseur. L'électrode positive peut être formée d'une couche active réalisée en un mélange de plusieurs matériaux, dont un matériau électrochimiquement actif, par exemple un oxyde de métal de transition lithié, des particules électriquement conductrices et d'un liant polymère assurant la tenue mécanique. La couche active recouvre partiellement un feuillard d'aluminium d'une dizaine de microns d'épaisseur.

Pour réaliser les électrodes, on enduit habituellement le feuillard métallique 40a, 40b d'une encre d'électrode qui comprend le ou les différents matériaux composant la couche active, ces matériaux étant dissous ou dispersés dans un solvant. L'étape d'enduction peut être effectuée par sérigraphie, flexographie, héliogravure ou par jet d'encre. Après séchage de l'encre pour évaporer le solvant, on obtient une couche active 50a, 50b qui recouvre partiellement ou entièrement le feuillard métallique 40a, 40b. L'électrode 20a, 20b ainsi obtenue est ensuite découpée selon le profil souhaité, dont la forme peut comporter une ou plusieurs bandes latérales 41a, 41b en saillie pour la reprise du courant électrique, et/ou une rive 42a, 42b qui entoure tout ou partie de la couche active 50a, 50b. Une rive périphérique, qui s'étend surtout le pourtourde la couche active, peut ainsi être nécessaire lorsqu'un joint électriquement isolant est disposé autour des couches actives et de l'électrolyte et s'appuie mécaniquement sur la rive périphérique de chaque électrode.

La découpe de l'électrode peut être effectuée avant l'étape d'assemblage des différentes parties de l'accumulateur, par exemple par une technique mécanique de refendage de l'électrode, voire après l'étape d'assemblage, lorsqu'un empilement multicouche a été obtenu dont la découpe permet d'obtenir plusieurs accumulateurs distincts.

A ce titre, la figure 2 illustre une vue en perspective d'un système de découpe au laser 60 pour obtenir des accumulateurs à base de lithium, tel que décrit dans le document WO91/11287. Le procédé associé à ce système de découpe comporte tout d'abord l'étape dans laquelle on réalise un empilement sous forme d'une feuille muticouche 70 comportant une électrode positive, un séparateur électriquement isolant et une électrode négative. Cet empilement est ensuite découpé au moyen d'un faisceau laser 80 incident sur la face externe 43 de l'un des feuillards, c'est-à-dire sur la face opposée à la face recouverte par la couche active (non représentée). En particulier, lorsque le feuillard est réalisé en aluminium ou en cuivre, on recouvre la face destinée à être éclairée par le faisceau laser d'un film en matériau plastique inerte pelable, par exemple en polypropylène ou polyéthylène. La source laser peut être une source à CO₂ délivrant une puissance comprise entre 0,5 et 600W, et opérant en régime continu ou en mode pulsé.

Cependant, cet exemple de procédé de découpe présente l'inconvénient de nécessiter, lorsque le feuillard est en aluminium ou en cuivre, l'utilisation d'un film protecteur pelable qui revêt la face du feuillard destinée à être éclairée par le faisceau laser. Le procédé comporte alors une étape supplémentaire de retrait du film et éventuellement de nettoyage du feuillard pour enlever les résidus du film protecteur.

Par ailleurs, ce procédé ne permet pas de découper une électrode avec un faisceau incident sur la face interne de celle-ci, c'est-à-dire du côté de la couche active. En effet, il serait nécessaire de recouvrir la face du feuillard métallique d'un film protecteur pelable, qui recouvrirait alors également la couche active. Le retrait ultérieur du film protecteur risquerait d'endommager la couche active.

L'article de Patwa et al. (2012) intitulé Investigation of different laser cutting strategies for sizing of Li-ion battery electrodes, ICALEO 2012, paper M804, 31st International Congress on Applications of Lasers and Electro-Optics, porte sur la découpe d'électrodes de batterie lithium-ion par laser de faible puissance. Ce document décrit une électrode formée d'un feuillard en aluminium ou de cuivre dont les deux faces opposées sont recouvertes d'une couche mince de matériau actif, par exemple un oxyde de métal lithié côté cathode et du graphite côté anode. Le procédé de découpe comporte la focalisation d'un faisceau laser le long d'un chemin de découpe, la puissance du laser étant inférieure à 600W.

L'article de Patwa et al. (2010) intitulé High speed laser cutting of electrodes for advanced batteries, ICALEO 2010, paper M902, 29th International Congress on Applications of Lasers and Electro-Optics, porte sur la découpe laser d'électrodes de batterie lithium-ion. Le document décrit notamment l'influence de la valeur de la puissance du laser sur la qualité de la découpe de différentes électrodes.

### EXPOSÉ DE L'INVENTION

L'invention a pour objectif de remédier au moins en partie aux inconvénients de l'art antérieur, et plus particulièrement de proposer un procédé simplifié de découpe d'une électrode d'un générateur électrochimique comportant un feuillard métallique, au moyen d'un faisceau laser de puissance faible ou modérée, et qui autorise notamment la découpe au niveau de la face interne de l'électrode.

L'invention propose à cet effet un procédé de découpe d'une électrode d'un générateur électrochimique comportant un feuillard métallique au moyen d'un faisceau laser d'une puissance inférieure ou égale à 600W. Selon l'invention, une face du feuillard métallique est partiellement revêtue d'une bande en couche mince, dite de découpe, dont le facteur d'absorption optique pour une longueur d'onde d'émission dudit faisceau laser est supérieur ou égal à 0.5, de préférence supérieur ou égal à 0.8, et s'étend sur ladite face de manière à définir un chemin de découpe. On focalise le faisceau laser sur la bande de découpe et on anime le faisceau laser d'un mouvement relatif par rapport à l'électrode de manière à parcourir ledit chemin de découpe.

Ladite face du feuillard métallique est partiellement revêtue d'une couche mince, dite active, adaptée à réagir électrochimiquement lors du fonctionnement du générateur, ladite bande de découpe s'étendant au moins en partie autour de la couche active.

La bande de découpe est, sur au moins une portion du chemin de découpe, située à distance de la couche active. Par située à distance, on entend que la bande de découpe n'est pas au contact, localement, de la couche active, ce qui forme localement une zone intermédiaire de la face du feuillard métallique non revêtue par la bande de découpe et par la couche active. La bande de découpe est au moins en partie distincte de la couche active, en particulier lorsque la bande de découpe est située sur la même face du feuillard que la couche active.

Certains aspects préférés mais non limitatifs de ce procédé de découpe sont les suivants :
La bande de découpe peut être réalisée en un ou plusieurs matériaux, dont au moins un matériau est commun avec le ou les matériaux de la couche active, et de préférence comporte le ou les mêmes matériaux que celui ou ceux de la couche active.

La couche active peut être réalisée en un mélange de plusieurs matériaux dont un matériau actif électrochimiquement, la bande de découpe étant réalisée en un mélange des mêmes matériaux que ceux de la couche active, avec une proportion massique du matériau actif inférieure à la proportion massique du matériau actif du mélange de la couche active.

La couche active peut comprendre un composant carboné et/ou un composant à base d'oxyde de métal lithié.

La bande de découpe peut comprendre un composant carboné et/ou un composant à base d'oxyde de métal lithié.

Le feuillard métallique peut être réalisé en aluminium ou en cuivre ou en nickel ou en acier inoxydable.

L'invention porte également sur un procédé de réalisation d'une électrode d'un générateur électrochimique comportant les étapes dans lesquelles :
- on dépose, sur une partie d'une face d'un feuillard métallique d'une électrode, une bande en couche mince, dite de découpe, dont le facteur d'absorption optique, pour une gamme de longueur d'onde donnée, est supérieur ou égal à 0.5, de préférence supérieur ou égal à 0.8, qui s'étend sur ladite face de manière à définir un chemin de découpe ;
- on dépose sur ladite face du feuillard métallique une couche mince, dite active, adaptée à réagir électrochimiquement lors du fonctionnement du générateur, ladite bande de découpe s'étendant au moins en partie autour de la couche active et étant située, sur au moins une portion du chemin de découpe, à distance de la couche active ;
- on découpe ladite électrode selon le procédé de l'une quelconque des caractéristiques précédentes.

De préférence, on dépose, sur ladite face du feuillard métallique, une couche mince, dite active, adaptée à réagir électrochimiquement lors du fonctionnement du générateur, ladite bande de découpe s'étendant au moins en partie autour de la couche active.

Les étapes de dépôt de la couche active et de la bande de découpe sur ladite face du feuillard métallique sont avantageusement effectuées simultanément.

Les étapes de dépôt de la couche active et de la bande de découpe sur ladite face du feuillard métallique sont avantageusement effectuées par sérigraphie.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels, outre les figures 1 et 2 déjà décrites précédemment :
la figure 3 est une vue schématique en perspective d'une électrode selon un mode de réalisation, comportant un feuillard métallique recouvert partiellement d'une couche active et d'une bande de découpe ;
la figure 4 est une vue en coupe de l'électrode représentée sur la figure 3 selon le plan de coupe A-A ;
les figures 5a à 5c sont des vues schématiques de dessus de plusieurs variantes d'électrodes dont la bande de découpe présente des chemins de découpe différents.

### EXPOSÉ DÉTAILLÉ DE MODES DE RÉALISATION PARTICULIERS

Sur les figures et dans la suite de la description, les mêmes références représentent des éléments identiques ou similaires. De plus, les différents éléments ne sont pas représentés à l'échelle, de manière à privilégier la clarté des figures.

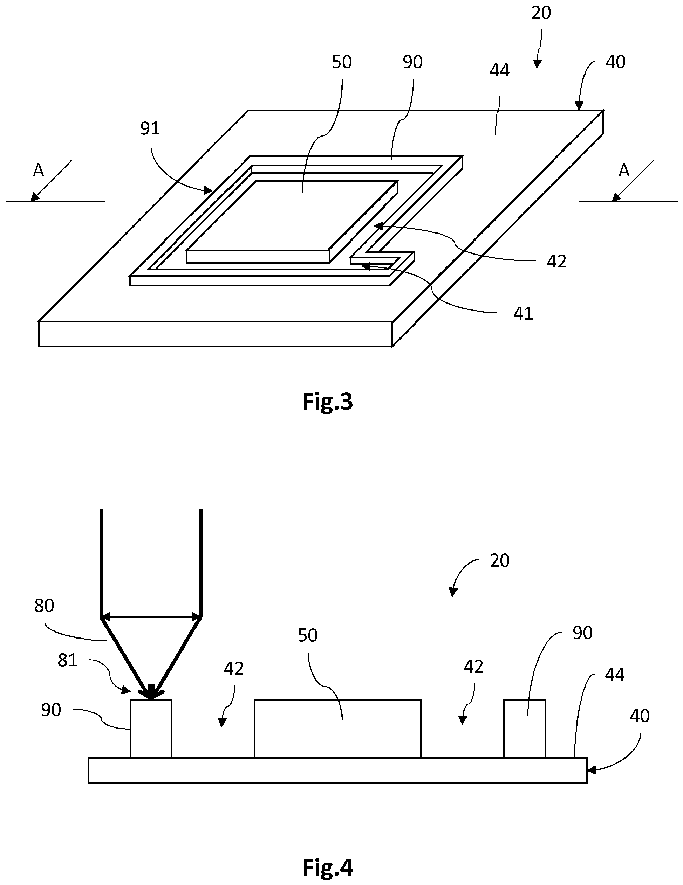

La figure 3 illustre une électrode 20 d'un accumulateur électrochimique à base de lithium destinée à être découpée au laser selon un mode de réalisation du procédé de découpe, et la figure 4 est une vue en coupe de l'électrode représentée sur la figure 3 selon le plan de coupe A-A.

L'électrode 20 comporte un support 40 électriquement conducteur sous la forme d'un feuillard métallique dont l'une de ses faces 44, dite interne, est partiellement revêtue d'une couche active 50 et d'une bande de découpe 90 qui entoure partiellement ou entièrement cette dernière.

Le feuillard métallique 40 assure une fonction de collecteur de courant électrique. Il est formé d'une feuille ou bande réalisée en un matériau métallique dont l'épaisseur est de l'ordre d'une dizaine de microns, par exemple 10 à 20µm. Le matériau peut être choisi parmi le cuivre, l'aluminium, le nickel, l'acier inoxydable, ou autre matériau adapté. La réflectivité optique, c'est-à-dire le rapport entre l'intensité du flux optique réfléchi et l'intensité du flux optique incident, pour une longueur d'onde d'émission du faisceau laser de découpe, est supérieure ou égale à 0.8, voire supérieure à 0.9. Ainsi, à titre d'exemple, l'aluminium et le cuivre présentent un coefficient de réflectivité de 0.99 pour une longueur d'onde de 10µm environ.

La couche active 50 est adaptée à réagir électrochimiquement lors du fonctionnement de l'accumulateur. Pour cela, elle comporte un matériau actif dont la nature dépend de la polarité de l'électrode. A titre d'exemple, le matériau actif de l'électrode négative peut être, entre autres, du graphite ou du Li₄Ti₅O₁₂, et celui de l'électrode positive peut être, entre autres, un matériau composite tel que du LiFePO₄ ou un oxyde de métal de transition lithié tel que du LiCoO₂ ou du LiNi_{1/3}Mn_{1/3}Co_{1/3}O₂ (également appelé NMC).

Elle peut également être formée d'un mélange de plusieurs matériaux, dont l'un est le matériau électrochimiquement actif. A titre d'exemple, la couche active de l'électrode positive comporte habituellement, outre le matériau actif mentionné précédemment, un matériau électriquement conducteur, par exemple sous forme de particules, et un liant assurant le maintien mécanique du mélange.

La couche active 50 se présente ici sous forme d'une couche mince, c'est-à-dire une couche dont l'épaisseur est de l'ordre de quelques microns à quelques centaines de microns, et dont le ou les matériaux la composant ont été déposés sur la surface du support de manière à former ladite couche. Elle présente une forme, en vue de dessus, sensiblement rectangulaire ou carrée, par exemple de dimensions allant de 25x25 mm² à 500x500 mm².

L'électrode 20 comporte également une couche mince étroite, dite bande de découpe 90, se présentant sur la forme d'une bande mince. Elle présente ainsi une dimension longitudinale supérieure à ses dimensions transversales de largeur et d'épaisseur. Cette bande de découpe 90 est une couche mince, dont la largeur transversale peut être de l'ordre de grandeur de l'épaisseur, celle-ci étant comprise entre 5 et 200µm, voire entre 20 et 100µm. Elle s'étend ici sur la face interne 44 du feuillard 40, et s'étend au moins partiellement autour de la couche active 50.

La bande de découpe 90 est réalisée en un ou plusieurs matériaux choisis de sorte que la bande présente un facteur d'absorption optique, pour une longueur d'onde donnée correspondant à la longueur d'onde d'émission du faisceau laser de découpe, supérieur ou égal à 0.5, et de préférence supérieur ou égal à 0.8. Le facteur d'absorption A est ici défini comme étant sensiblement égal à 1-R-T, où R est le facteur de réflectivité de la couche considérée (rapport entre l'intensité optique du faisceau laser réfléchie et l'intensité optique incidente) et T est le facteur de transmission de la couche (rapport entre l'intensité optique du faisceau laser transmise et l'intensité optique incidente).

Il est avantageux, lorsque le ou les matériaux de la couche active présentent un facteur d'absorption supérieur ou égal à 0.5, voire à 0.8, de choisir les mêmes matériaux pour réaliser la bande de découpe, dans une proportion massique différente ou égale. Dans ce cas, l'étape de dépôt de la bande de découpe sur la face interne du feuillard peut être réalisée simultanément à celle de dépôt de la couche active. A titre d'exemple, la bande de découpe peut être réalisée en graphite, voire en un mélange contenant un oxyde de métal lithié, des particules conductrices électriques, en particulier du graphite, ou tout autre matériau adapté, tel que des poudres métalliques, du kaolin ou de la bentonite.

La bande de découpe 90 s'étend suivant une étendue longitudinale qui définit un chemin de découpe 91 destiné à être suivi par le point de focalisation 81 du faisceau laser 80 lors de la découpe (figures 3 et 4). Ainsi, le chemin de découpe 91 délimite la bordure de l'électrode obtenue après découpe. Le positionnement de la bande de découpe 90 vis-à-vis de la couche active 50 permet de définir des rives 42 et/ou une ou plusieurs bandes latérales 41 de reprise de courant électrique. A ce titre, l'exemple de la figure 3 montre une bande de découpe 90 située à distance de la couche active 50 sur tout le long du chemin de découpe 91, définissant ainsi une rive 42 périphérique continue. Par située à distance, on entend que la bande de découpe n'est localement pas au contact de la couche active, ce qui forme localement une zone intermédiaire de la face 44 du feuillard métallique non revêtue par la bande de découpe 90 et par la couche active 50. La bande de découpe est au moins en partie distincte de la couche active, en particulier lorsque la bande de découpe est située sur la même face du feuillard que la couche active. De plus, le chemin de découpe 91 présente ici un écartement latéral de manière à définir une bande latérale 41 de reprise du courant électrique. Il est à noter que le chemin de découpe 91 de la figure 3 est donné uniquement à titre illustratif et que tout type de chemin de découpe est possible.

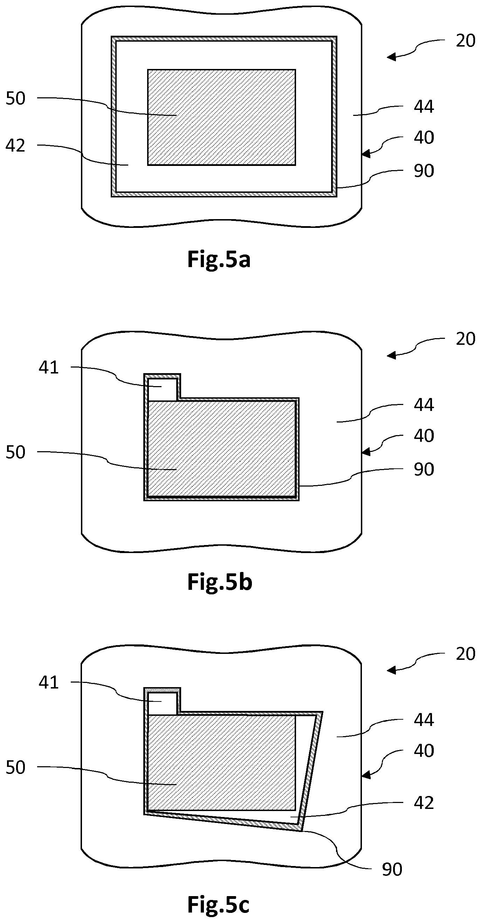

Les figures 5a à 5c illustrent de manière schématique et en vue de dessus différents positionnements de la bande de découpe vis-à-vis de la couche active.

Sur la figure 5a, la bande de découpe 90 s'étend autour et à distance de la couche active 50, de manière à définir une rive 42 périphérique continue d'une largeur sensiblement constante. A titre d'exemple, la couche active 50 présente des dimensions latérales de 14x17mm² à 500x500 mm² et la bande de découpe 90 présente une largeur de 2 mm à 20 mm et s'étend sur un périmètre de 70 mm à 2000 mm, à une distance vis-à-vis de la bordure de la couche active 50 de 5 mm à 50 mm.

Sur la figure 5b, la bande de découpe 90 s'étend autour et au contact de la couche active 50, sur sensiblement tout le pourtour de celle-ci, hormis une zone où elle s'en écarte de manière à définir une bande latérale 41 de reprise du courant électrique. Cette bande latérale 41 présente ici des dimensions de 5x5 mm² à 25x25 mm².

Sur la figure 5c, la bande de découpe 90 s'étend autour de la couche active 50, au contact de celle-ci sur certaines zones et à distance de celle-ci sur d'autres zones. Elle s'écarte localement de la couche active 50 pour former une bande latérale 41 de reprise du courant. Elle s'en écarte également sur d'autres zones pour former des rives 42 de différentes formes.

De manière avantageuse, la bande de découpe 90 forme une couche sacrificielle, c'est-à-dire une couche destinée à disparaître lors de la découpe au laser. Pour cela, l'épaisseur et la largeur de la bande de découpe 90 sont dimensionnées pour que celle-ci soit entièrement désagrégée par le faisceau laser 80 lors de la découpe.

Dans le but de réaliser la découpe de l'électrode décrite précédemment, on prévoit un laser comportant une source laser associée à un système optique de focalisation (non représentés). De manière connue en soi, un système de contrôle de l'atmosphère au niveau du point de focalisation du faisceau peut être prévu, ainsi que des moyens d'aspiration des fumées et/ou résidus générés lors de la découpe.

La source laser peut être une source à gaz, à solide ou de tout autre type, adaptée à émettre un faisceau laser à une longueur d'onde d'émission donnée, avec une puissance inférieure ou égale à 600W et de préférence supérieure ou égale à 25W, en régime continu ou en mode pulsé, par exemple comprise entre 50 et 500W, voire entre 100 et 200W. A titre d'exemple, la source laser peut être une source laser à CO₂ émettant un faisceau laser d'une longueur d'onde de 10µm environ, en régime continu, d'une puissance de l'ordre de 100W. La vitesse de découpe est ici de l'ordre de 100mm/s, mais est de préférence corrélée à la puissance du laser. Ainsi, la vitesse de découpe pourra être importante, par exemple égale à quelques dizaines de centimètres par seconde, lorsque la puissance du laser est de l'ordre de quelques centaines de watt, et pourra être réduite, par exemple à quelques centimètres par seconde, lorsque la puissance est de l'ordre de quelques dizaines de watt.

Le système optique de focalisation assure la focalisation du faisceau émis par la source au niveau de la bande de découpe, par exemple au niveau de la surface supérieure de celle-ci. Le faisceau 80 forme alors, au niveau de la bande de découpe 90, un point ou un spot de focalisation 81 (figure 4).

Par ailleurs, on prévoit des moyens mécaniques pour animer le laser d'un mouvement relatif vis-à-vis de l'électrode, de sorte que le point de focalisation suive le chemin de découpe formé par la bande de découpe.

On décrit maintenant un exemple de procédé de découpe d'une électrode négative pour accumulateur Li-ion. On réalise au préalable un empilement formé d'une encre d'électrode déposée sur un feuillard de cuivre de 12µm. L'encre d'électrode comporte ici du graphite à proportion massique de 96%, un liant à base de cellulose à proportion massique de 2% et du latex à proportion de 2%, le tout dans un solvant organique. L'étape de dépôt peut être réalisée par sérigraphie, mais toute autre technique de dépôt peut être utilisée, par exemple la flexographie, l'héliogravure, le jet d'encre ou le spray. L'écran de sérigraphie, par exemple de type toilé, est dimensionné pour déposer l'encre sur une surface voulue de la face interne du feuillard.

On procède au dépôt d'une couche destinée à former la bande de découpe, l'étendue longitudinale de cette couche déposée forme un chemin de découpe pour le faisceau laser. Dans cet exemple, la même encre d'électrode est destinée à former la couche active et la bande de découpe. Elle est alors avantageusement déposée de manière simultanée, d'une part sur la surface de la face interne du feuillard destinée à recevoir la couche active, et d'autre part sur la surface de la face interne destinée à recevoir la bande de découpe.

Alternativement, l'étape de dépôt de l'encre d'électrode et celle de dépôt de la bande de découpe peuvent être effectuées de manière séparée. Par ailleurs, une autre encre d'électrode peut être utilisée pour former la bande de découpe, comportant les mêmes composants que ceux de l'encre destinée à former la couche active mais en proportion massique différente.

On procède ensuite au séchage de l'empilement obtenu, de manière à évaporer le solvant. Le séchage peut être effectué dans un four à 50°C pendant quelques minutes. On obtient ainsi la couche active et la bande de découpe. Un calandrage de l'empilement peut être effectué, par exemple à 80°C, de manière à optimiser la porosité de la couche active et/ou celle de la bande de découpe. L'épaisseur de la couche active et celle de la bande de découpe peuvent être ici de l'ordre de 50 à 100µm environ.

On procède ensuite à la découpe de l'empilement en focalisant le faisceau laser d'une source à CO₂ d'une puissance de 100W de longueur d'onde d'émission centrée à 10µm, en régime continu, sur la surface de la bande de découpe. Le point de focalisation du faisceau laser parcourt tout le chemin de découpe, à une vitesse de découpe de l'ordre de quelques centimètres à quelques dizaines de centimètres par seconde.

On obtient ainsi une électrode présentant la forme voulue, avec éventuellement au moins une rive s'étendant sur tout ou partie du contour de la couche active et/ou au moins une bande latérale de feuillard destinée à assurer la reprise du courant électrique.

On décrit maintenant un exemple de procédé de découpe d'une électrode positive pour accumulateur Li-ion. La réalisation par découpe au laser de l'électrode positive peut être effectuée suivant un procédé similaire à celui décrit pour l'électrode négative. Une encre d'électrode est préalablement obtenue à partir d'un mélange, réalisé dans un solvant organique, d'un matériau actif, par exemple du NMC à proportion massique de 92%, de charges électriquement conductrices, par exemple du noir de carbone à proportion massique de 4% et un liant, par exemple du polyfluorure de vinylidène à proportion de 4%. L'encre d'électrode est déposée sur la face interne d'un feuillard d'aluminium de 18µm, par exemple par sérigraphie, au niveau de la surface de la face du feuillard destinée à recevoir la couche active.

De manière avantageuse, lorsque la couche active et la bande de découpe sont réalisées en un même mélange de matériaux, l'encre d'électrode est déposée simultanément sur la surface de la face destinée à recevoir la bande de découpe. Alternativement, la bande de découpe peut être déposée lors d'une étape distincte de celle du dépôt de la couche active, notamment lorsque la bande de découpe est formée de matériaux différents de ceux de la couche active, ou des mêmes matériaux mais en proportions différentes. A titre illustratif, lorsque la bande de découpe comporte les mêmes matériaux que ceux de la couche active mais en proportions différentes, il est possible d'ajuster l'absorption optique dans une gamme allant de 0.75 à 0.95 environ, et d'obtenir une conductivité thermique allant de 1 W/mK à 10W/mK environ.

Après une étape de séchage et éventuellement une étape de calandrage, on obtient un empilement d'un feuillard d'aluminium dont la face interne est partiellement revêtue d'une couche active d'une épaisseur de l'ordre de 100µm, celle-ci étant entourée entièrement ou partiellement par la bande de coupure qui présente ici une épaisseur similaire à celle de la couche active.

On procède ensuite à la découpe de l'empilement obtenu suivant un procédé de découpe similaire à celui décrit précédemment.

Ainsi, par l'utilisation d'une bande de découpe de facteur d'absorption optique élevé, déposée sur une face du feuillard métallique, le procédé selon les différents exemples de réalisation décrits précédemment permet de réaliser la découpe de l'électrode selon le profil voulu au moyen d'un faisceau laser de puissance modérée, celle-ci étant inférieure ou égale à 600W.

A la différence de l'exemple de l'art antérieur décrit précédemment, il n'est pas nécessaire d'utiliser un film protecteur pelable pour procéder à la découpe, ce qui permet de simplifier le procédé. De plus, il est possible de procéder à la découpe au niveau de la face interne du feuillard sans avoir à revêtir cette face et donc également la couche active, du film protecteur dont le retrait ultérieur risquerait de dégrader la couche active. Le procédé permet ainsi de réaliser une découpe à la distance souhaitée de la couche active, éventuellement au plus près de celle-ci, en fonction des applications souhaitées.

De plus, le procédé assure une découpe du feuillard sans dégradation de la couche active, malgré la conductivité thermique élevée du métal formant le feuillard, du fait de l'utilisation d'un faisceau laser d'une puissance modérée. La découpe au laser de puissance modérée permet également d'éviter les dégradations de l'électrode inhérentes aux techniques de découpe mécanique. En effet, les moyens de découpe mécanique appliquent des efforts aux différentes parties de l'électrode qui induisent des contraintes mécaniques se traduisant par une dégradation de la tenue mécanique de l'électrode.

Par ailleurs, par un dimensionnement adéquat des dimensions transversales de la bande de découpe, celle-ci peut être désagrégée entièrement par le faisceau laser lors de l'étape de découpe. La bande de découpe forme ainsi une couche sacrificielle qui disparaît entièrement après la découpe, ce qui permet de former une bordure nette du feuillard.

Il est enfin possible de découper le feuillard métallique selon le contour souhaité, pour former ainsi le nombre et la forme de rives voulus, et/ou des parties de reprise de contact et de collection du courant électrique.

Des modes de réalisation particuliers viennent d'être décrits. Différentes variantes et modifications apparaîtront à l'homme du métier.

Ainsi, on a décrit un procédé de découpe d'une électrode au moyen d'un faisceau laser incident sur la face interne de l'électrode, c'est-à-dire avec une bande de découpe située sur la même face que la couche active. En variante, la bande de découpe peut être disposée sur la face externe du feuillard métallique, opposée à la face interne, de manière à former un contour de découpe qui entoure la couche active située sur la face interne.

## Revendications

1. Procédé de découpe d'une électrode (20) d'un générateur électrochimique comportant un feuillard métallique (40) au moyen d'un faisceau laser (80) d'une puissance inférieure ou égale à 600W,
une face (44) du feuillard métallique (40) étant partiellement revêtue d'une bande (90) en couche mince, dite de découpe, dont le facteur d'absorption optique pour une longueur d'onde d'émission dudit faisceau laser (80) est supérieur ou égal à 0.5, de préférence supérieur ou égal à 0.8, et s'étend sur ladite face (44) de manière à définir un chemin de découpe (91), ladite face (44) du feuillard métallique (40) étant partiellement revêtue d'une couche mince (50), dite active, adaptée à réagir électrochimiquement lors du fonctionnement du générateur, ladite bande de découpe (90) s'étendant au moins en partie autour de la couche active (50),
dans lequel on focalise le faisceau laser (80) sur la bande de découpe (90) et on anime le faisceau laser (80) d'un mouvement relatif par rapport à l'électrode (20) de manière à parcourir ledit chemin de découpe (91),
**caractérisé en ce que** ladite bande de découpe (90) est située, sur au moins une portion du chemin de découpe (91), à distance de la couche active (50).

2. Procédé de découpe selon la revendication 1, dans lequel la bande de découpe (90) est réalisée en un ou plusieurs matériaux, dont au moins un matériau est commun avec le ou les matériaux de la couche active (50), et de préférence comporte le ou les mêmes matériaux que celui ou ceux de la couche active (50).

3. Procédé de découpe selon la revendication 2, dans lequel la couche active (50) est réalisée en un mélange de plusieurs matériaux dont un matériau actif électrochimiquement, la bande de découpe (90) étant réalisée en un mélange des mêmes matériaux que ceux de la couche active (50), avec une proportion massique du matériau actif inférieure à la proportion massique du matériau actif du mélange de la couche active (50).

4. Procédé de découpe selon l'une quelconque des revendications 1 à 3, dans lequel la couche active (50) comprend un composant carboné et/ou un composant à base d'oxyde de métal lithié.

5. Procédé de découpe selon l'une quelconque des revendications 1 à 4, dans lequel la bande de découpe (90) comprend un composant carboné et/ou un composant à base d'oxyde de métal lithié.

6. Procédé de découpe selon l'une quelconque des revendications 1 à 5, dans lequel le feuillard métallique (40) est réalisé en aluminium ou en cuivre ou en nickel ou en acier inoxydable.

7. Procédé de réalisation d'une électrode (20) d'un générateur électrochimique comportant les étapes dans lesquelles :
- on dépose, sur une partie d'une face (44) d'un feuillard métallique (40) d'une électrode (20), une bande (90) en couche mince, dite de découpe, dont le facteur d'absorption optique, pour une gamme de longueur d'onde donnée, est supérieur ou égal à 0.5, de préférence supérieur ou égal à 0.8, qui s'étend sur ladite face (44) de manière à définir un chemin de découpe(91) ;
- on dépose sur ladite face (44) du feuillard métallique (40) une couche mince (50), dite active, adaptée à réagir électrochimiquement lors du fonctionnement du générateur, ladite bande de découpe (90) s'étendant au moins en partie autour de la couche active (50) et étant située, sur au moins une portion du chemin de découpe (91), à distance de la couche active (50) ;
- on découpe ladite électrode (20) selon le procédé de l'une quelconque des revendications précédentes.

8. Procédé de réalisation d'une électrode selon la revendication 7, dans lequel les étapes de dépôt de la couche active (50) et de la bande de découpe (90) sur ladite face (44) du feuillard métallique (44) sont effectuées simultanément.

9. Procédé de réalisation d'une électrode selon la revendication 8 ou 9, dans lequel les étapes de dépôt de la couche active (50) et de la bande de découpe (90) sur ladite face (44) du feuillard métallique (44) sont effectuées par sérigraphie.

## Patentansprüche

1. Verfahren zum Trimmen einer Elektrode (20) eines elektrochemischen Generators, die ein Metallband (40) aufweist, mittels eines Laserstrahls (80) mit einer Leistung von weniger als oder gleich 600 W,
wobei eine Fläche (44) des Metallbandes (40) teilweise mit einem Dünnschichtstreifen (90), der Schneidstreifen genannt wird, beschichtet wird, dessen optischer Absorptionsfaktor für eine Emissionswellenlänge des Laserstrahls (80) größer als oder gleich 0,5, vorzugsweise größer als oder gleich 0,8 ist und sich über die Fläche (44) derart erstreckt, um einen Schneidweg (91) zu definieren, wobei die Fläche (44) des Metallbandes (40) teilweise mit einer Dünnschicht (50), die Aktivschicht genannt wird, beschichtet wird, die geeignet ist, während des Betriebs des Generators elektrochemisch zu reagieren, wobei sich der Schneidstreifen (90) mindestens teilweise um die Aktivschicht (50) herum erstreckt,
wobei der Laserstrahl (80) auf den Schneidstreifen (90) fokussiert wird und der Laserstrahl (80) mit einer Relativbewegung in Bezug auf die Elektrode (20) derart bewegt wird, um den Schneidweg (91) zurückzulegen,
**dadurch gekennzeichnet, dass** der Schneidstreifen (90) auf mindestens einem Abschnitt des Schneidwegs (91) beabstandet von der Aktivschicht (50) angeordnet wird.

2. Verfahren zum Trimmen nach Anspruch 1, wobei der Schneidstreifen (90) aus einem oder mehreren Materialien erstellt wird, wovon mindestens ein Material mit dem oder den Materialien der Aktivschicht (50) gemeinsam ist und vorzugsweise das oder die gleichen Materialien aufweist, wie jenes oder jene der Aktivschicht (50).

3. Verfahren zum Trimmen nach Anspruch 2, wobei die Aktivschicht (50) aus einer Mischung von mehreren Materialien erstellt wird, darunter ein elektrochemisch aktives Material, wobei der Schneidstreifen (90) aus einer Mischung der gleichen Materialien wie jene der Aktivschicht (50) mit einem Gewichtsverhältnis des aktiven Materials erstellt wird, das niedriger als das Gewichtsverhältnis des aktiven Materials der Mischung der Aktivschicht (50) ist.

4. Verfahren zum Trimmen nach einem der Ansprüche 1 bis 3, wobei die Aktivschicht (50) eine kohlenstoffhaltige Komponente und/oder eine Komponente auf Basis eines lithiumhaltigen Metalloxids umfasst.

5. Verfahren zum Trimmen nach einem der Ansprüche 1 bis 4, wobei der Schneidstreifen (90) eine kohlenstoffhaltige Komponente und/oder eine Komponente auf Basis eines lithiumhaltigen Metalloxids umfasst.

6. Verfahren zum Trimmen nach einem der Ansprüche 1 bis 5, wobei das Metallband (40) aus Aluminium oder Kupfer oder Nickel oder Edelstahl hergestellt wird.

7. Verfahren zum Herstellen einer Elektrode (20) eines elektrochemischen Generators, das die Schritte aufweist, in denen:
- auf einen Teil einer Fläche (44) eines Metallbandes (40) einer Elektrode (20) ein Dünnschichtstreifen (90), der Schneidstreifen genannt wird, aufgebracht wird, dessen optischer Absorptionsfaktor für einen gegebenen Wellenlängenbereich größer als oder gleich 0,5, vorzugsweise größer als oder gleich 0,8 ist und sich über die Fläche (44) derart erstreckt, um einen Schneidweg (91) zu definieren,
- auf die Fläche (44) des Metallbandes (40) eine Dünnschicht (50), die Aktivschicht genannt wird, aufgebracht wird, die geeignet ist, während des Betriebs des Generators elektrochemisch zu reagieren, wobei sich der Schneidstreifen (90) mindestens teilweise um die Aktivschicht (50) herum erstreckt und auf mindestens einem Abschnitt des Schneidwegs (91) beabstandet von der Aktivschicht (50) angeordnet wird;
- die Elektrode (20) gemäß dem Verfahren nach einem der vorangehenden Ansprüche getrimmt wird.

8. Verfahren zum Herstellen einer Elektrode nach Anspruch 7, wobei die Schritte des Aufbringens der Aktivschicht (50) und des Schneidstreifens (90) auf die Fläche (44) des Metallbandes (44) gleichzeitig durchgeführt werden.

9. Verfahren zum Herstellen einer Elektrode nach Anspruch 8 oder 9, wobei die Schritte des Aufbringens der Aktivschicht (50) und des Schneidstreifens (90) auf die Fläche (44) des Metallbandes (44) durch Siebdruck durchgeführt werden.

## Claims

1. Process for cutting an electrode (20) of an electrochemical generator including a metal sheet (40) by means of a laser beam (80) of a power lower than or equal to 600 W, one face (44) of the metal sheet (40) being partially coated with a thinly layered band (90) called the cutting band, the optical absorption factor of which, for an emission wavelength of said laser beam (80), is higher than or equal to 0.5 and preferably higher than or equal to 0.8, and extends over said face (44) so as to define a cutting path (91), said face (44) of the metal sheet (40) being partially coated with a thin layer (50) called the active layer, which is adapted to react electrochemically during operation of the generator, said cutting band (90) extending at least partially around the active layer (50),
in which the laser beam (80) is focused on the cutting band (90) and the laser beam (80) is animated with a relative movement with respect to the electrode (20) so as to travel said cutting path (91),
**characterized in that** said cutting band (90) is located, on at least one section of the cutting path (91), away from the active layer (50).

2. Cutting process according to Claim 1, in which the cutting band (90) is made of one or more materials, at least one material of which is common with the one or more materials of the active layer (50), and preferably includes the same material(s) as that or those of the active layer (50).

3. Cutting process according to Claim 2, in which the active layer (50) is produced from a mixture of a plurality of materials including an electrochemically active material, the cutting band (90) being produced from a mixture of the same materials as those of the active layer (50), with a proportion by weight of the active material lower than the proportion by weight of the active material in the mixture of the active layer (50).

4. Cutting process according to any one of Claims 1 to 3, in which the active layer (50) comprises a carbon-containing component and/or a component based on lithiated metal oxide.

5. Cutting process according to any one of Claims 1 to 4, in which the cutting band (90) comprises a carbon-containing component and/or a component based on lithiated metal oxide.

6. Cutting process according to any one of Claims 1 to 5, in which the metal sheet (40) is produced from aluminium or copper or nickel or stainless steel.

7. Process for producing an electrode (20) for an electrochemical generator including the steps in which:
- a thinly layered band (90) called the cutting band, the optical absorption factor of which, for a given wavelength range, is higher than or equal to 0.5 and preferably higher than or equal to 0.8, is deposited on a portion of one face (44) of a metal sheet (40) of an electrode (20), said cutting band extending over said face (44) so as to define a cutting path (91);
- a thin layer (50) called the active layer, which is adapted to react electrochemically during operation of the generator, is deposited on said face (44) of the metal sheet (40), said cutting band (90) extending at least partially around the active layer (50) and being located, on at least one section of the cutting path (91), away from the active layer (50); and
- said electrode (20) is cut according to the process of any one of the preceding claims.

8. Process for producing an electrode according to Claim 7, in which the steps of depositing the active layer (50) and cutting band (90) on said face (44) of the metal sheet (44) are carried out simultaneously.

9. Process for producing an electrode according to Claim 8 or 9, in which the steps of depositing the active layer (50) and cutting band (90) on said face (44) of the metal sheet (44) are carried out by screen printing.
